# EUROPÄISCHE PATENTSCHRIFT

(11) **EP 1 137 474 B1**
(45) Veröffentlichungstag und Bekanntmachung des Hinweises auf die Patenterteilung: **11.02.2004**
(21) Anmeldenummer: 99964529.4
(22) Anmeldetag: 07.12.1999
(51) Int. Cl.: B01D 46/52

(54) **GEHÄUSE, INSBESONDERE FILTERGEHÄUSE MIT FILTEREINSATZ**
HOUSING, ESPECIALLY A FILTER HOUSING WITH A FILTER CARTRIDGE
BOITIER, EN PARTICULIER BOITIER DE FILTRE AVEC CARTOUCHE FILTRANTE

(30) Priorität: 08.12.1998 DE 19856520
(43) Veröffentlichungstag der Anmeldung: 04.10.2001
(73) Patentinhaber: Mann + Hummel GmbH, 71638 Ludwigsburg (DE)
(72) Erfinder: GÖRG, Günter, D-71696 Möglingen (DE)
(74) Vertreter: Voth, Gerhard
(86) Internationale Anmeldenummer: PCT/EP1999/009581
(87) Internationale Veröffentlichungsnummer: WO 2000/033938

(56) Entgegenhaltungen:
- EP-A- 0 490 169
- FR-A- 2 752 172
- US-A- 2 135 863
- US-A- 5 853 577

## Beschreibung

Die Erfindung betrifft ein Filter, insbesondere ein Luftfilter für die Verbrennungsluft von Brennkraftmaschinen, in den ein Filtereinsatz derart eingesetzt ist, daß dieser für die Dichtung der Gehäuseschalen sorgt. Außerdem betrifft die Erfindung abgedichtete Gehäuse, die aus wenigstens zwei Gehäuseschalen bestehen.

Aus der EP 490 196 B2 ist ein Filter bekannt, dessen Gehäuse gemäß Figur 3 aus zwei Gehäuseschalen besteht. Zur Montage des Filtereinsatzes wird das Gehäuse geöffnet und der Filtereinsatz derart in die eine Gehäuseschale eingelegt, daß eine am Rand des Filtereinsatzes angebrachte Dichtung in die Flanschverbindung zwischen den Gehäuseschalen hineinreicht. Anschließend werden die Gehäuseschalen wieder zusammengesetzt. Dabei wird einerseits der Filtereinsatz im Gehäuse fixiert, andererseits wird eine Dichtung im Flansch erzeugt. Die Dichtwirkung wird dadurch erhöht, daß in der Flanschverbindung ein Wulst mit einer korrespondierenden Nut vorgesehen ist, die zu einer zusätzlichen Verformung der Dichtung im Bereich des Flansches führt.

Eine in der oben beschriebenen Weise gestaltete Gehäuseabdichtung wirft jedoch fertigungstechnische Probleme auf. Die Flanschverbindung wird gebildet durch eine um die Gehäusewand umlaufende Dichtfläche, die mit der entsprechenden Gegenfläche im anderen Gehäuseteil korrespondieren muß. In Fügerichtung hat die am Filtereinsatz angebrachte Dichtung eine geringe Ausdehnung. Daher müssen die Gehäuseteile mit einer hohen Genauigkeit hergestellt werden, da bereits geringe Formabweichungen, z. B. durch Verzug der Bauteile, zu einem Klaffen des Dichtspaltes führen würden. Auf diese Weise könnten Verunreinigungen durch angesaugte Nebenluft in die Reinseite des Filters gelangen, was in jedem Fall vermieden werden muß. Insbesondere bei Gehäuseteilen aus Kunststoff, dem heute üblichen Werkstoff für Luftfiltergehäuse, ist der Verzug der Gehäuseteile sehr groß. Um eine zuverlässige Dichtung zu erreichen, müssen daher im Bereich des Flansches eine Vielzahl von Befestigungsmitteln vorgesehen werden, die im Zusammenwirken einen genügenden Anpreßdruck erzeugen. Dies bedeutet jedoch einen erhöhten Aufwand in der Montage bzw. beim Auswechseln des Filters.

Gemäß der EP 490 169 B2 wird weiter vorgeschlagen, eine Zusatzdichtung in einem der Gehäuseteile vorzusehen oder fest mit der am Filtereinsatz befindlichen Dichtung zu verbinden. Dies bedeutet jedoch einen nachteiligen Aufwand entweder durch einen zusätzlichen Fertigungsschritt für den Filtereinsatz oder während der Endmontage bei der Handhabung der zusätzlichen Dichtung. Im übrigen bewirkt die Dichtung zwar eine Vergrößerung des Toleranzbereiches in der Flanschverbindung, schwächt das oben angeführte Problem jedoch nur ab. Die Dichtung kann in Fügerichtung der Gehäuseteile nur eine begrenzte Ausdehnung haben. Wird diese Ausdehnung zu groß gewählt so steigen die Montagekräfte nämlich in den Bereichen enger Spalte in der Flanschverbindung wieder an. Es sind jedoch gerade die Montagekräfte, die durch diese Maßnahme verringert werden sollen.

Die US-A-3 932 153 beschreibt ein Filtergehäuse entsprechend der Merkmalskombination gemäß dem Oberbegriff von Anspruch 1. Auch hier ergeben sich die oben genannten Nachteile.

Es ist daher Aufgabe der Erfindung, ein aus mindestens zwei Schalen bestehendes Gehäuse zu schaffen, welches den Anforderungen an die Dichtheit gerecht wird und dabei kostengünstig in der Herstellung ist und einen geringen Aufwand in der Montage hervorruft.

Diese Aufgabe wird durch die Merkmale des Patentanspruches 6 gelöst. Ferner wird gemäß Anspruch 1 ein Filter beansprucht, welcher die Aufgabe in gleicher Weise löst und zur Aufnahme eines Filtereinsatzes geeignet ist.

### Vorteile der Erfindung

Der erfindungsgemäße Filter umfaßt zwei Gehäuseteile, die zur Aufnahme eines Filtereinsatzes im Gehäuseinneren geeignet sind. Dabei wird die Rohseite des Filters von der Reinseite dadurch getrennt, daß eine Dichtung am Filtereinsatz angebracht ist, welche in die Trennfuge zwischen den Gehäuseteilen hineinreicht. Werden die Gehäuseteile zusammengesetzt, wird die Dichtwirkung durch die am Filtereinsatz angebracht Dichtung erzeugt. Bezogen auf die Endmontage kann der Filter also dreiteilig aufgebaut sein, wenn als Montagemittel z. B. Schnappverbindungen an der Flanschverbindung zwischen den Gehäuseteilen vorgesehen sind. Der Montageaufwand für den erfindungsgemäßen Filter kann also auf ein Minimum reduziert werden.

Zur Verbesserung der Dichtwirkung ist im Bereich der Trennfuge in eines der Gehäuseteile mindestens eine Quetschnut eingebracht, in die nach erfolgter Montage ein Quetschsteg des anderen Gehäuseteils hineinreicht. Die Dichtung besteht aus einem elastisch verformbaren Material, so daß diese durch den Quetschsteg in die Quetschnut hineingedrückt wird. Dabei liegt die Dichtung fest an der Druckkante des Quetschsteges an, während die Quetschnut hinreichend tief ausgeprägt ist, daß die Dichtung den Nutgrund nicht berührt. Der zur Abdichtung der Trennfuge nötige Druck auf die Dichtung kommt daher in erster Linie durch eine Biegeverformung der Dichtung entlang der Druckkanten der Quetschstege zustande und nicht durch eine Kompression der Dichtung selbst.

Auf diese Weise wird der Betrag der auf die Dichtung auszuübenden Dichtkraft stark verringert. Durch die geringe Ausdehnung der Dichtfläche in Form der Druckkanten der Quetschstege wird insgesamt eine genügend große Druckkraft auf die Dichtung ausgeübt.

Die Gestaltung des Dichtungsverbandes hat zunächst den Vorteil, daß die Haltekräfte, die durch die Verbindungsmittel zwischen den Gehäuseschalen ausgeübt werden muß, stark verringert wird. Dies führt zu einer Erhöhung der Wirtschaftlichkeit des Filters, z. B. durch eine Reduzierung der benötigten Anzahl von Montageschrauben. Der wesentliche Vorteil der erfinderischen Dichtungsgestaltung liegt jedoch in der Möglichkeit, einen großen Toleranzbereich für die Gehäuseteile vorsehen zu können. Der Toleranzbereich ergibt sich durch die Tiefe der Quetschnut. Die Höhe der Quetschstege ist so gewählt, daß sie bei Fehlen einer Formabweichung der Gehäuseteile ein Stück in die Quetschnut hineinragen. Die Formabweichungen führen dann zu einer Variation der Eintauchtiefe der Quetschstege in die Quetschnuten. Unabhängig hiervon legt sich die Dichtung innerhalb des Toleranzbereiches immer an die Druckkanten der Quetschstege an, wobei die Haltekraft zwischen den beiden Gehäuseteilen nur unwesentlich variiert. Die Grenzen des Toleranzbereiches sind einerseits durch die oberen Ränder der Quetschnut, andererseits, durch den Nutgrund der Quetschnut gegeben. Im letzteren Fall kann es also im Grenzbereich zu einer zusätzlichen plastischen Verformung der Dichtung kommen, wenn die Druckkante des Quetschsteges aufgrund von Bauteiltoleranzen bis an den Nutgrund der Quetschnut reicht.

Vorteilhafterweise kann die Dichtung aus einem faserförmigen Vlies bestehen. Hierbei eignen sich insbesondere Fasern aus thermoplastischen Kunststoff, die bei der Entsorgung des Filtereinsatzes thermisch verwertet werden können. Der Einsatz des Vlieses als Dichtung hat weiterhin den Vorteil, daß in den Bereichen einer großen Überschneidung zwischen Quetschnut und Quetschstegen das Vlies teilweise plastisch verformt werden kann. Dies geschieht durch eine Streckung des Faserverbandes bzw. durch ein Aneinandergleiten der einzelnen Vliesfasern. Auf diese Weise können die bei der Verformung der Dichtung auftretenden Druckkräfte unterhalb eines bestimmtem Betrages gehalten werden, wodurch die Montagekräfte für die beiden Dichtschalen weiter herabgesetzt werden können.

Unter Verwendung eines Dichtvlieses entsteht ein Dichtungsverband, der sich wie oben beschrieben an den Druckkanten der Quetschstege abstützt. Dabei entsteht eine mit einer Labyrinthdichtung vergleichbare Dichtungsgeometrie, wobei eine evtl. Luftdurchlässigkeit der Dichtung bewußt in Kauf genommen wird. In diesem Fall wirkt das Dichtvlies wie ein Filterelement, indem es vom Nebenluftstrom durchströmt wird. Ein ungefilteter Nebenluftstrom ist nicht möglich, da sich die Vliesdichtung an den Druckkanten der Quetschstege abstützt. Um die geforderte Luftreinheit auf der Reinseite des Filters zu gewährleisten, muß die Filterfeinheit der Vliesdichtung bzw. deren Abscheidegrad mindestens so hoch sein, wie die des Filtereinsatzes.

Während des Gebrauches kann die Vliesdichtung durch abgeschiedene Partikel zugesetzt werden, was den Nebenluftstrom verringert, jedoch die Funktion des Filters in keiner Weise beeinträchtigt.

Gemäß einer zweckmäßigen Ausgestaltung des Erfindungsgedankens ist eine Vielzahl von Quetschstegen in der Trennfuge vorgesehen. Dabei können die Quetschnuten jeweils von den Zwischenräumen zwischen zwei Quetschstegen gebildet werden. Die Nutränder sind also gleichzeitig die Druckkanten der Quetschstege. Auf diese Weise kann die Dichtwirkung der Dichtung erhöht werden, wobei durch die Funktionsintegration von Quetschnuten und Quetschstegen der Raumbedarf der Trennfuge in Grenzen gehalten wird.

Eine günstige Ausführungsform der Erfindung sieht auf den Druckkanten Mittel zur Verhakung der Dichtungen vor. Diese können aus Zähnen bestehen, die sich insbesondere bei der Vliesdichtung in das Dichtmaterial graben. Auf diese Weise wird ein Herausrutschen der Dichtung verhindert. Die Zähne können an die Druckkanten der Quetschstege angegossen sein. Alternativ hierzu können auch andere Mittel zur Verhakung z. B. Noppen vorgesehen sein. Es ist auch denkbar, die Druckkanten aus einem rutschfesten Material zu fertigen, welches beispielsweise in Mehrkomponententechnik an die Gehäuseteile angespritzt wird.

Eine Modifikation der Erfindung sieht vor, die Dichtung gleichzeitig als Befestigung des Filtereinsatzes im Gehäuseinneren zu nutzen. Auf diese Weise werden zusätzliche Anlageflächen für das Filterelement an den Innenwänden des Gehäuses gespart. Hierdurch ergibt sich ein zusätzlicher Toleranzspielraum für die Gestaltung des Gehäuses sowie des Filtereinsatzes. Eine solche Bauform des Filtereinsatzes in Kombination mit den Mitteln zur Verhakung in der Trennfuge stellt außerdem eine Möglichkeit dar, auf eine Endfaltenverstärkung am Filtereinsatz zu verzichten. Diese werden im allgemeinen nötig, wenn das Filterelement sich zur Erzeugung einer Abdichtung an der Gehäusewand abstützt.

Die Gestaltung der Trennfuge zwischen den Gehäuseteilen ist alternativ für alle Arten von Gehäusen, insbesondere im Ansaugtrakt einer Brennkraftmaschine, zu verwenden. Zur Abdichtung kann ein faserförmiges Vlies zur Anwendung kommen. Sollte sich aufgrund der Gestaltung eine gewisse Luftdurchlässigkeit ergeben, so ist natürlich darauf zu achten, daß das Dichtvlies dennoch eine Abdichtung gegen evtl. eintretende und unerwünschte Partikel gewährleistet.

Eine zweckmäßige Ausbildung des Erfindungsgedankens sieht vor, den Filtereinsatz aus dem selben Material zu fertigen wie die Dichtung. Diese Variante eignet sich insbesondere für Filtereinsätze aus Vlies. Für die luftdurchlässige Dichtung ist dann das Erfordernis einer genügenden Partikelabscheidung gegeben, da der Abscheidegrad dem des Filtermediums entspricht. Ein so gestalteter Filtereinsatz ist besonders unproblematisch in der Entsorgung, da zu Herstellung ein einziges Material zu Anwendung kommt. Bei der Wahl eines Kunststoffvlieses kann ein solches Bauteil thermisch entsorgt werden. Außerdem besteht wegen der Sortengleichheit der Kunststoffe die Möglichkeit, ausgediente Filtereinsätze wieder der Kunststoffherstellung zuzuführen.

Es ergeben sich folgende sinnvolle Ausführungsformen für die Filtereinsätze. Die Filtereinsätze können als Flachfilterpatronen ausgeführt sein, wobei das Filtermedium zickzackförmig gefaltet ist. Dabei können die Endfalten des Filtermediums als Dichtung aus dem Filtereinsatz herausragen. Auf diese Weise wird die Anzahl der Teile, aus denen das Filterelement aufgebaut ist, verringert. Dies führt zu einer wirtschaftlicheren Herstellung des Filtereinsatzes. Es ist aber auch möglich, durch Tiefziehen eines Vliesrohlings ein Integralbauteil herzustellen, welches gleichzeitig als Dichtung und als Filterrahmen fungiert. In den Rahmenteil dieses Integrationsbauteils wird das Filtermedium eingebracht und mit diesem verbunden. Dies kann z. B. durch Verkleben oder thermisches Verschweißen geschehen.

Gemäß einer weiteren Ausgestaltung der Erfindung kann auch eine Rundfilterpatrone verwendet werden. Diese weist dann einen sternförmig gefaltetes Filtermedium auf, welches an den Stirnseiten Endscheiben aufweist. Am äußeren Rand der Endscheiben kann eine Vliesdichtung mit der oben beschriebenen Funktion angebracht werden. Eine weitere Möglichkeit besteht darin, die Endscheibe selbst aus Vlies zu fertigen, wobei die Vliesdichtung in dieses Bauteil integriert ist. Hieraus ergeben sich die bereits genannten Vorteile, daß das gesamte Filterelement aus einem Material bestehen kann.

Diese und weitere Merkmale von bevorzugten Weiterbildungen der Erfindung gehen außer aus den Ansprüchen auch aus der Beschreibung und den Zeichnungen hervor.

### Zeichnungen

Weitere Einzelheiten der Erfindung werden in den Zeichnungen anhand von schematischen Ausführungsbeispielen beschrieben. Hierbei zeigen
- Figur 1: den teilweisen Schnitt durch ein Filter, bestehend aus zwei Gehäuseschalen und einem Flachfiltereinsatz, wobei der Filtereinsatz durch eine Vliesdichtung in der Trennfuge der Gehäuseteile fixiert ist,
- Figur 2: eine perspektivische Ansicht der Quetschstege, die Zähne zur Fixierung der Dichtung aufweisen, wie diese in einem Gehäuse gemäß Figur 1 zur Anwendung kommen,
- Figur 3: den Längsschnitt durch eine Rundfilterpatrone mit Endscheiben und aufgeklebter Vliesdichtung,
- Figur 4: einen aus Vlies gefertigten Flachfiltereinsatz mit tiefgezogenem Filterrahmen, der gleichzeitig als Dichtung fungiert und
- Figur 5: ein aus Vlies gefertigtes Flachfilterelement, wobei die Endfalte des Filtermediums als Vliesdichtung verwendet wird.

### Beschreibung der Ausführungsbeispiele

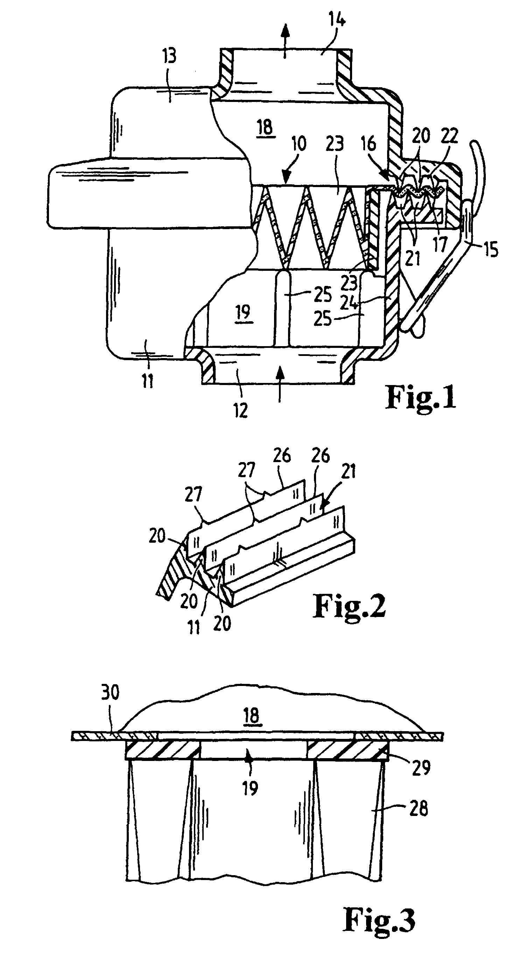

Figur 1 zeigt einen Filter bestehend aus einem Gehäuse und einem Filtereinsatz 10. Das Gehäuse weist eine Gehäuseschale 11 mit einem Einlaß 12 und einen Deckel 13 mit einem Auslaß 14 auf. Die Gehäuseteile sind durch Spannbügel 15 fest miteinander verbunden. In eine Trennfuge 16 ist eine Dichtung 17, die Teil des Filtereinsatzes 10 ist, eingelegt. Auf diese Weise wird eine Reinseite 18 von einer Rohseite 19 des Filtereinsatzes getrennt.

Die Trennfuge 16 wird gebildet durch Quetschstege 20, deren Zwischenräume Quetschnuten 21 bilden, wobei sich Quetschstege und Quetschnuten derart abwechseln, daß die Quetschstege des jeweils anderen Gehäuseteils in die Quetschnuten eintauchen. Die Quetschstege reichen dabei nicht bis auf einen Nutgrund 22 der jeweiligen Quetschnut.

Die Montage des Filters erfolgt durch Einsetzen des Filtereinsatzes 10 in die Gehäuseschale 11. Dieser weist in Bezug auf die Gehäuseöffnung ein Untermaß auf, da eine Abdichtung einer Filterumrahmung 23 mit einer Wandung 24 der Gehäuseschale 11 nicht notwendig ist. Der Filtereinsatz 10 kann also ohne großen Aufwand locker in die Gehäuseschale eingelegt werden und wird durch Rippen 25 vorläufig in der Einbaulage gehalten. Die Dichtung 17 überlappt die Einbauöffnung in der Gehäuseschale 11, so daß sie im Bereich der Trennfuge zur Anlage kommt. Durch Aufsetzen des Deckels 13 und Betätigung der Spannbügel 15 wird die Dichtung durch das Zusammenwirken von Quetschstegen 20 und Quetschnuten 21 verformt, was zur gewünschten Dichtwirkung führt.

In Figur 2 ist ein Ausschnitt der Gehäuseschale 11 gemäß Figur 1 im Bereich der Trennfuge dargestellt. Es sind die Quetschstege 20 und die Quetschnuten 21 zu erkennen. Die Quetschstege enden in Druckkanten 26, welche in regelmäßigen Abständen Zähne 27 zur Fixierung der Dichtungen aufweisen.

In Figur 3 ist ein Filtereinsatz in der Ausgestaltung einer Rundfilterpatrone dargestellt. Ein sternförmig gefaltetes Filtermedium 28 weist an dessen Stirnseiten Folienendscheiben 29 auf. Eine Abdichtung zwischen der Rohseite 19 und der Reinseite 18 der bevorzugt von außen nach innen durchstömten Filterpatrone erfolgt im Bereich der dargestellten Folienendscheibe 29 durch Anbringen eines Vliesringes 30, welcher einen größeren Durchmesser aufweist, als die Filterpatrone. Somit kann der äußere Bereich z. B. entsprechend dem in der Figur 1 beschriebenen Dichtsystem zwischen zwei nicht dargestellten Gehäuseteilen eingeklemmt werden.

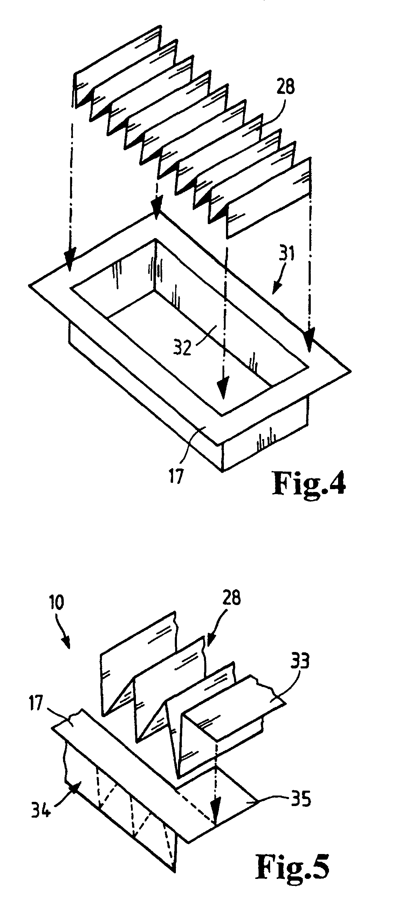

Die in Figur 4 und 5 dargestellten Flachfiltereinsätze eignen sich zum Einbau in ein Gehäuse gemäß Figur 1. Beide Filter sind ausschließlich aus einem Kunststoffaservlies gefertigt. Das Filtermedium 28 besteht aus einer zickzackförmig gefalteten Vliesbahn. Gemäß Figur 4 wird das Filtermedium in Pfeilrichtung in ein im Tiefziehverfahren hergestelltes Integralbauteil 31 eingesetzt und thermisch verschweißt oder verklebt. Das Integralbauteil besteht aus dem selben Material wie das Filtermedium. Es kann daher am Filtrationsprozess teilnehmen, was zu einer Vergrößerung der effektiven Filterfläche führt (dies gilt auch für die in Figur 5 dargestellte Variante). Das Integralbauteil 31 weist einen flächigen Bereich auf, der die Funktion der Dichtung 17 übernimmt und den tiefgezogenen Bereich, der die Funktion eines Filterrahmens 32 übemimmt. Der Filterrahmen 32 gewährleistet in erster Linie eine Abdichtung der Stimkanten des Filtermediums 28. Das gesamte Filterelement ist also aus zwei Teilen gefertigt. In der Ausgestaltung des Filtereinsatzes 10 gemäß Figur 5 wird eine Endfalte 33 des Filtermediums zur Bildung der Dichtung des Filtereinsatzes hochgeklappt. Die Stimkanten des Filtermediums werden an einem Seitenstreifen 34 angeklebt, welcher ebenfalls zur Bildung der Dichtung 17 umgeklappt wird. Am Ende des Seitenstreifens 34 ist eine Lasche 35 vorgesehen, die eine Verbindung der Dichtung 17 mit der ebenfalls als Dichtung vorgesehenen Endfalte 33 ermöglicht.

### Bezugszeichen

- 10: Filtereinsatz
- 11: Gehäuseschale
- 12: Einlaß
- 13: Deckel
- 14: Auslaß
- 15: Spannbügel
- 16: Trennfuge
- 17: Dichtung
- 18: Reinseite
- 19: Rohseite
- 20: Quetschsteg
- 21: Quetschnut
- 22: Nutgrund
- 23: Filterumrahmung
- 24: Wandung
- 25: Rippe
- 26: Druckkante
- 27: Zahn
- 28: Filtermedium
- 29: Folienendscheibe
- 30: Vliesring
- 31: Integralbauteil
- 32: Filterrahmen
- 33: Endfalte
- 34: Seitenstreifen
- 35: Lasche

## Patentansprüche

1. Filter, insbesondere Luftfilter für die Verbrennungsluft von Brennkraftmaschinen, umfassend eine Gehäuseschale (11) und einen Deckel (13), wobei diese Gehäuseteile (11, 13) einen Filtereinsatz (10) im Gehäuseinneren fixieren, so dass der Filtereinsatz eine mit einem Einlass (12) versehene Rohseite (19) von einer mit einem Auslaß (14) versehenen Reinseite (18) trennt und wobei eine Dichtung (17) zumindest teilweise aus einem flächigen, durch die Montagekräfte des Deckels (13) verformbaren Material besteht, welches derart am Filtereinsatz (10) angebracht ist, dass es in eine Trennfuge (16) zwischen Gehäuseschale (11) und Deckel (13) hineinreicht und diese dichtend abschließt, indem die Dichtung (17) durch mindestens einen an einem der Gehäuseteile (11, 13) angebrachten, im wesentlichen parallel zur Gehäusewandung verlaufenden Quetschsteg (20) in mindestens eine hierfür vorgesehene Quetschnut (21) im anderen der Gehäuseteile hineingedrückt ist, wobei der mindestens eine Quetschsteg (20) eine Druckkante (26) aufweist, an der die Dichtung (17) einseitig anliegt, **dadurch gekennzeichnet, dass** die gegenüberliegende Seite der Dichtung im Bereich der Druckkante in einen durch die Quetschnut (21) gebildeten Hohlraum ragt, wobei die Quetschnut hinreichend tief ausgeprägt ist, dass die Dichtung (17) den Nutgrund nicht berührt.

2. Filter nach Anspruch 1, **dadurch gekennzeichnet, dass** eine Vielzahl von Quetschstegen (20) und -nuten (21) vorgesehen ist, und die Quetschnuten (21) durch die Zwischenräume zwischen den Quetschstegen (20) gebildet sind.

3. Filter nach einem der Ansprüche 1 oder 2, **dadurch gekennzeichnet, dass** die Druckkanten (26) mit Mitteln zur Verhakung der Dichtung (17), insbesondere Zähnen (27), versehen sind.

4. Filter nach einem der Ansprüche 1 bis 3, **dadurch gekennzeichnet, dass** die Dichtung (17) gleichzeitig die Befestigung des Filtereinsatzes im Gehäuseinneren ist.

5. Filter nach einem der Ansprüche 1 bis 4, **dadurch gekennzeichnet, dass** die Dichtung aus einem faserförmigen Vlies insbesondere aus thermoplastischem Kunststoff besteht.

6. Gehäuse umfassend eine Gehäuseschale (11) und einen Deckel (13), wobei eine Dichtung (17) zumindest teilweise aus einem flächigen, durch die Montagekräfte des Deckels (13) verformbaren Material, insbesondere einem Faservlies, besteht, welches derart in die Trennfuge (16) zwischen Gehäuseschale (11) und Deckel (13) eingelegt ist, dass diese dichtend abgeschlossen ist, indem die Dichtung (17) durch mindestens einen an einem der Gehäuseteile angebrachten, im wesentlichen parallel zur Gehäusewandung verlaufenden Quetschsteg (20) in mindestens eine hierfür vorgesehene Quetschnut (21) im anderen der Gehäuseteile hineingedrückt ist, wobei, der mindestens eine Quetschsteg (20) eine Druckkante (26) aufweist, an der die Dichtung (17) einseitig anliegt, **dadurch gekennzeichnet, dass** die gegenüberliegende Seite der Dichtung im Bereich der Druckkante in einen durch die Quetschnut gebildeten Hohlraum ragt, wobei die Quetschnut hinreichend tief ausgeprägt ist, dass die Dichtung (17) den Nutgrund nicht berührt.

## Claims

1. Filter, more especially an air filter for the combustion air of internal combustion engines, said filter including a housing shell (11) and a cover (13), these housing parts (11, 13) securing a filter element (10) in the housing interior so that the filter element separates an unfiltered side (19), which is provided with an inlet (12), from a filtered side (18), which is provided with an outlet (14), and a seal (17) being formed, at least partially, from a flat material which is deformable by the assembly forces of the cover (13), and which material is mounted on the filter element (10) in such a manner that it extends into a separation joint (16) between the housing shell (11) and the cover (13) and terminates said joint sealingly, while the seal (17) is pressed by at least one clamping rib (20), which is mounted on one of the housing parts (11, 13) and extends substantially parallel to the housing wall, into at least one clamping groove (21), provided therefor, in the other of the housing parts, the at least one clamping rib (20) having a pressure edge (26), against which the seal (17) abuts unilaterally, **characterised in that** the oppositely situated side of the seal in the region of the pressure edge protrudes into a cavity formed by the clamping groove (21), the clamping groove being sufficiently deeply defined that the seal (17) does not come into contact with the groove base.

2. Filter according to claim 1, **characterised in that** a plurality of clamping ribs (20) and clamping grooves (21) are provided, and the clamping grooves (21) are formed by the spaces between the clamping ribs (20).

3. Filter according to one of claims 1 or 2, **characterised in that** the pressure edges (26) are provided with means for interlocking the seal (17), more especially teeth (27).

4. Filter according to one of claims 1 to 3, **characterised in that** the seal (17) is simultaneously the means for securing the filter element in the housing interior.

5. Filter according to one of claims 1 to 4, **characterised in that** the seal is formed from a fibrous non-woven fabric, more especially from a thermoplastic material.

6. Housing, including a housing shell (11) and a cover (13), a seal (17) being formed, at least partially, from a flat material which is deformable by the assembly forces of the cover (13), more especially a non-woven fibrous fabric, and which material is inserted into the separation joint (16) between the housing shell (11) and the cover (13) in such a manner that said joint is sealingly terminated, while the seal (17) is pressed by at least one clamping rib (20), which is mounted on one of the housing parts and extends substantially parallel to the housing wall, into at least one clamping groove (21), provided therefor, in the other of the housing parts, the at least one clamping rib (20) having a pressure edge (26), against which the seal (17) abuts unilaterally, **characterised in that** the oppositely situated side of the seal in the region of the pressure edge protrudes into a cavity formed by the clamping groove, the clamping groove being sufficiently deeply defined that the seal (17) does not come into contact with the groove base.

## Revendications

1. Filtre, en particulier filtre à air pour l'air de combustion de moteurs à combustion, comprenant une enveloppe de boîtier (11) et un couvercle (13), ces parties de boîtier (11, 13) fixant une cartouche filtrante (10) dans l'intérieur du boîtier, de sorte que la cartouche filtrante sépare un côté brut (19) pourvu d'une entrée (12) d'un côté filtré (18) pourvu d'une sortie (14), avec un joint (17) qui se compose au moins en partie d'un matériau plat, déformable en raison de la force de montage du couvercle (13), le matériau étant fixé à la cartouche filtrante (10) de telle sorte qu'il passe dans un plan de joint (16) situé entre l'enveloppe de boîtier (11) et le couvercle (13) et obture hermétiquement le plan de joint, le joint (17) étant par au moins une nervure de serrage (20) prévue sur l'une des parties de boîtier (11, 13) et essentiellement parallèle à la paroi du boîtier, serrage inséré dans au moins une rainure de serrage (21) prévue à cet effet dans l'autre partie du boîtier, la nervure de serrage (20) présentant une arête d'appui (26) contre laquelle le joint (17) est appuyé sur un côté,
**caractérisé en ce que**
le côté opposé du joint, dans la zone de l'arête d'appui, dépasse dans une cavité formée par la rainure de serrage (21), la rainure de serrage étant assez profonde pour que le joint (17) ne soit pas en contact avec le fond de la rainure.

2. Filtre selon la revendication 1,
**caractérisé en ce qu'**
il est prévu une multitude de nervures de serrage (20) et de rainures de serrage (21), et les rainures (21) sont formées par les espaces intermédiaires entre les nervures de serrage (20).

3. Filtre selon l'une des revendications 1 ou 2,
**caractérisé en ce que**
les arêtes d'appui (26) sont munies de dispositifs d'accrochage du joint (17), en particulier de dents (27).

4. Filtre selon l'une des revendications 1 à 3,
**caractérisé en ce que**
le joint (17) constitue simultanément la fixation de la cartouche filtrante dans l'intérieur du boîtier.

5. Filtre selon l'une des revendications 1 à 4,
**caractérisé en ce que**
le joint est composé d'un non-tissé fibreux, en particulier en plastique thermoplastique.

6. Boîtier comportant une enveloppe de boîtier (11) et un couvercle (13), avec un joint (17) qui se compose au moins en partie d'un matériau plat, déformable en raison de la force de montage, en particulier un non-tissé fibreux, le matériau étant introduit dans le plan de joint (16) situé entre l'enveloppe de boîtier (11) et le couvercle (13) de telle sorte que le plan de joint est obturé hermétiquement, le joint (17) étant par l'intermédiaire d'au moins une nervure de serrage (20) prévue sur l'une des parties de boîtier et essentiellement parallèle à la paroi du boîtier inséré dans au moins une rainure de serrage (21) prévue à cet effet sur l'autre seconde partie du boîtier, la nervure de serrage (20) présentant une arête d'appui (26) contre laquelle le joint (17) est appuyé sur un côté,
**caractérisé en ce que**
le côté opposé du joint, dans la zone de l'arête d'appui, dépasse dans une cavité formée par la rainure de serrage, la rainure de serrage étant assez profonde pour que le joint (17) ne soit pas en contact avec le fond de la rainure.
